# FASCICULE DE BREVET EUROPEEN

(11) **EP 2 291 228 B1**
(45) Date de publication et mention de la délivrance du brevet: **23.07.2014**
(21) Numéro de dépôt: 09761676.7
(22) Date de dépôt: 08.06.2009
(51) Int. Cl.: B01D 15/36, B01D 39/16, B01J 20/26, B01J 32/00, C08F 2/32, C08F 220/56, C08F 226/06, C08J 9/28

(54) **MATERIAU POLYHIPE A HAUTE TENUE MECANIQUE, SON PROCEDE DE PREPARATION, EMULSION UTILE POUR SA PREPARATION ET ARTICLE CONSTITUE D'UN TEL MATERIAU**
HOCHFESTES POLYHIPE-MATERIAL, HERSTELLUNGSVERFAHREN DAFÜR, FÜR SEINE HERSTELLUNG NÜTZLICHE EMULSION UND GEGENSTAND AUS EINEM DERARTIGEN MATERIAL
HIGH-STRENGTH POLYHIPE MATERIAL, ITS PRODUCTION PROCESS, EMULSION USEFUL FOR ITS PRODUCTION AND ARTICLE CONSISTING OF SUCH A MATERIAL

(30) Priorité: 09.06.2008 FR 0853809
(43) Date de publication de la demande: 09.03.2011
(73) Titulaire: Commissariat à l'Énergie Atomique et aux Énergies Alternatives, 75015 Paris (FR)
(72) Inventeur: BESNARD, Olivier, F-37250 Veigne (FR); PASQUINET, Eric, F-37550 Saint Avertin (FR); DELEUZE, Hervé, F-33125 Saint Magne (FR); BIROT, Marc, F-33400 Talence (FR); AUDOUIN, Fabrice, F-33220 Port Sainte Foy (FR)
(74) Mandataire: Ilgart, Jean-Christophe
(86) Numéro de dépôt international: PCT/EP2009/056998
(87) Numéro de publication internationale: WO 2009/150113

(56) Documents cités:
- WO-A1-94/13704
- WO-A2-02/34798
- FR-A- 1 343 961
- US-A- 5 200 433

## Description

### DOMAINE TECHNIQUE

La présente invention se rapporte à un matériau polyHIPE qui présente, entre autres propriétés, celle d'avoir une résistance mécanique particulièrement élevée.

Elle se rapporte également à un procédé et à une émulsion permettant de préparer ce matériau ainsi qu'à un article ou objet constitué en tout ou partie d'un tel matériau.

Le matériau polyHIPE selon l'invention est susceptible de trouver des applications dans tous les domaines où l'utilisation d'un matériau qui associe, aux propriétés inhérentes à une structure cellulaire interconnectée, une résistance mécanique remarquable, peut présenter un intérêt.

En particulier, il est susceptible d'être utilisé dans la fabrication de supports de catalyseurs pour la catalyse hétérogène et, notamment, de photo-catalyseurs du type dioxyde de titane ou dioxyde d'étain pour la dépollution de l'eau ou de l'air par photocatalyse, la fabrication de filtres à particules, la fabrication d'adsorbants d'ions métalliques pour la purification de l'eau, celle de capteurs de gaz, par exemple, d'ozone, ainsi que, plus généralement, dans toutes les applications dans lesquelles l'utilisation de matériaux sous forme de blocs monolithiques à cellules ouvertes et interconnectées est requise.

### ÉTAT DE LA TECHNIQUE ANTÉRIEURE

Les matériaux « polyHIPE » (de **Poly**merised **H**igh **I**nternal **P**hase **E**mulsion) sont obtenus par polymérisation d'une émulsion dénommée HIPE (de **H**igh **I**nternal **P**hase **E**mulsion) et qui est composée :
- d'une part, d'une phase externe ou dispersante qui est essentiellement constituée de monomères polymérisables et d'un agent tensioactif en solution dans un solvant, et
- d'autre part, d'une phase interne ou dispersée qui représente typiquement 74% ou plus du volume total de l'émulsion et qui est essentiellement constituée d'un solvant non miscible aux monomères polymérisables ou au solvant de la phase dispersante.

Après polymérisation et élimination du solvant de la phase dispersée, on obtient des matériaux à cellules ouvertes dont les cellules correspondent à l'empreinte des bulles formées par ce solvant au cours de la préparation de l'émulsion et sont interconnectées par des ouvertures de plus petite taille qu'elles, communément désignées sous le terme de pores.

Les matériaux polyHIPE présentent un rapport volume vide/volume plein particulièrement élevé et, donc, une densité particulièrement faible, ainsi qu'une structure cellulaire isotropique, sphérique et régulière, ce qui les rend très différents des matériaux polymères alvéolaires classiquement obtenus par soufflage ou extrusion qui se caractérisent, eux, par une structure cellulaire anisotropique, orientée et irrégulière.

Compte tenu de leurs caractéristiques, les matériaux polyHIPE sont l'objet d'un intérêt croissant et leur utilisation a été proposée dans de nombreux domaines parmi lesquels on peut citer la fabrication d'articles absorbants jetables, d'articles d'isolation thermique, acoustique, électrique ou mécanique, de membranes, de filtres ou encore de supports pour les encres, les colorants et les catalyseurs.

La très grande majorité des matériaux polyHIPE décrits dans la littérature à ce jour est représentée par des matériaux obtenus à partir d'émulsions HIPE « eau-dans-huile », c'est-à-dire ayant pour phase dispersante, une phase organique et pour phase dispersée, une phase aqueuse. Dans ce cas, les monomères polymérisables sont des monomères hydrophobes, généralement à insaturation vinylique tels que le styrène, le divinylbenzène et l'acrylate de 2-éthyl-hexyle.

Or, H. Deleuze et al. ont montré, dans Polymer 2005, 46, 9653-9663 **[1],** que des matériaux polyHIPE à partir de monomères hydrophobes du type styrène et divinylbenzène présentent, même avec un taux de réticulation de 50%, un module d'Young de 9 MPa, soit une valeur que l'on considère généralement comme trop faible pour certaines applications.

On connaît aussi des matériaux polyHIPE issus d'émulsions HIPE « huile-dans-eau », c'est-à-dire ayant pour phase dispersante, une phase aqueuse et pour phase dispersée, une phase organique. Ainsi, par exemple, la demande internationale PCT publiée sous le n° WO 2004/044041 **[2]** décrit l'utilisation, pour la fabrication d'articles d'hygiène absorbants, d'émulsions HIPE dont la phase dispersante est une phase aqueuse dans laquelle sont dissous des monomères polymérisables hydrophiles du type acide acrylique et ses dérivés tandis que la phase dispersée est constituée d'une huile de silicone. Egalement, P. Krajnc et al. décrivent, dans Macromol. Rapid Comm. 2005, 26, 1289-1293 **[3],** la préparation d'un polymère cellulaire constitué d'acide acrylique réticulé par le *N,N'*-méthylène-bis(acrylamide) à partir d'une émulsion HIPE « huile-dans-eau ». Cependant, tous ces travaux conduisent à des matériaux polyHIPE qui ont un haut pouvoir gonflant dans les milieux aqueux mais qui ont une faible tenue mécanique.

Il serait donc souhaitable de disposer de matériaux qui, tout en présentant les avantages propres aux matériaux polyHIPE, aient une résistance mécanique élevée ou, à tout le moins, suffisamment élevée pour que leur utilisation dans toutes les applications qui ont été proposées pour ce type de matériaux puisse être réellement envisagée.

La présente invention a précisément pour but de fournir un matériau polyHIPE à haute tenue mécanique.

### EXPOSÉ DE L'INVENTION

La présente invention a donc, en premier lieu, pour objet un matériau polyHIPE qui comprend sous forme copolymérisée :
a) au moins un monomère *N*-alcényltriazole de formule générale (I) ci-après : 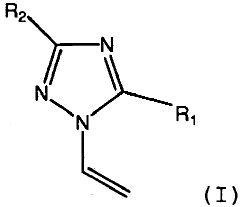 dans laquelle R₁ et R₂ représentent, indépendamment l'un de l'autre, un atome d'hydrogène ou d'halogène, un groupe -OH, -SH, -SO₃H, -NO₂, -NH₂, -COOH, -CₙF₂ₙ₊₁ où n est un nombre entier allant de 1 à 12, un groupe hydrocarboné aliphatique en C₁ à C₁₆, éventuellement interrompu par un ou plusieurs atomes d'oxygène et/ou de soufre, ou bien un groupe hydrocarboné cyclique en C₃ à C₁₆ ou hétérocyclique de 3 à 16 chaînons ; et
b) au moins un monomère réticulant ; dans un rapport massique monomère réticulant/monomère N-alcényltriazole de 1/100 à 60/100.

Dans ce qui précède et ce qui suit :
* l'expression « *groupe hydrocarboné aliphatique en C₁ à C₁₆* » désigne tout groupe hydrocarboné, linéaire ou ramifié mais non cyclique, saturé ou insaturé et qui est formé par au moins un atome de carbone et au plus 16 atomes de carbone ; ainsi, il peut s'agir d'un groupe alkyle (par exemple, méthyle, éthyle, *n*-propyle, isopropyle, butyle, isobutyle, *sec-*butyle, *tert*-butyle, pentyle, isopentyle, hexyle, heptyle, octyle, nonyle ou décyle), alcényle (par exemple, éthylényle, propylényle, butényle, pentényle, hexényle, méthylpentényle ou buta-1,3-diényle) ou bien encore alcynyle (par exemple, éthynyle, propynyle, butynyle, pentynyle, hexynyle ou octynyle) ; lorsque ce groupe est interrompu par un ou plusieurs atomes d'oxygène ou de soufre, alors cela signifie que ce ou ces atomes sont intercalés entre deux atomes de carbone ;
* l'expression « *groupe hydrocarboné cyclique en C₃ à C₁₆* » désigne tout groupe hydrocarboné monocyclique ou polycyclique, saturé ou insaturé et qui est formé par au moins 3 atomes de carbone et au plus 16 atomes de carbone ; il peut s'agir d'un groupe non aromatique, c'est-à-dire d'un groupe cycloalkyle (par exemple, cyclopropyle, cyclobutyle, cyclopentyle, cyclohexyle, cyclooctyle, norbornyle, bicyclo[4.3.2]-undécyle, bicyclo[4.4.0]décyle ou adamantyle), cyclo-alcényle ou cycloalcynyle, mais il peut également s'agir d'un groupe aromatique, c'est-à-dire d'un groupe satisfaisant à la règle de Hückel et présentant un nombre d'électrons π délocalisés égal à 4*n* + 2 (par exemple, phényle, benzyle, biphényle, phényl-acétylényle, pyrényle ou anthra-cényle) ;
* l'expression « *groupe hydrocarboné hétérocyclique de 3 à 16 chaînons »* désigne un groupe hydrocarboné cyclique tel qu'il vient d'être défini mais dont un ou plusieurs atomes du cycle ou des cycles qui le constituent sont remplacés par un hétéroatome, typiquement un atome d'oxygène, de soufre ou d'azote ; là également, il peut s'agir d'un groupe non aromatique, c'est-à-dire d'un groupe hétérocycloalkyle (par exemple, tétrahydrothiényle, pyrrolidinyle, tétrahydrofuryle, pipéridinyle, dioxanyle ou morpholinyle), hétérocycloalcényle ou hétérocyclo-alcynyle mais il peut également s'agir d'un groupe hétéroaromatique (par exemple, furyle, pyrrolyle, thiényle, oxazolyle, pyrazolyle, thiazolyle, imidazolyle, triazolyle, pyridinyle, pyranyle, quinoléinyle, pyrazinyle ou pyrimidinyle).

Conformément à l'invention, le monomère *N*-alcényltriazole peut se présenter sous la forme d'un sel lorsque R¹ et/ou R² représentent un groupe apte à former un sel, ce qui est notamment le cas des groupes -OH, -SH, -SO₃H, -NH₂, -COOH et des groupes hétérocycliques azotés du type pipéridinyle ou morpholinyle. Ce sel peut être un halogénure, un hydroxyde, un sel d'acide minéral (nitrate par exemple) ou un sel d'acide organique (acétate par exemple) lorsque le groupe salifiable se présente sous la forme d'un cation (-NH³⁺ par exemple) ; toutefois, il peut également être un sel d'un métal alcalin ou alcalino-terreux lorsque le groupe salifiable se présente sous la forme d'un anion (-SO₃⁻ ou -COO⁻ par exemple) .

Par ailleurs, lorsque R₁ et/ou R₂ représentent un groupe hydrocarboné cyclique ou hétérocyclique et, plus spécialement, lorsqu'il s'agit d'un groupe aromatique ou hétéroaromatique, alors ce groupe peut être substitué par un ou plusieurs groupes polaires du type -OH, -SH, -NH₂, -CO₂H ou -SO₃H, de manière à favoriser la solubilité du monomère *N*-alcényltriazole dans les solvants polaires.

Conformément à l'invention, le monomère *N*-alcényltriazole de formule générale (I) est, de préférence, choisi parmi les monomères dans lesquels R₁ et R₂ représentent, indépendamment l'un de l'autre, un atome d'hydrogène, un groupe -OH, -SH, -SO₃H, -NO₂, -NH₂, -COOH ou CₙF₂ₙ₊₁ avec n tel que précédemment défini, le 1-vinyl-1,2,4-triazole étant tout particulièrement préféré.

Le monomère réticulant est, lui, de préférence choisi parmi les composés polyvinyliques solubles dans les solvants polaires tels que l'eau, le diméthylformamide, le diméthylsulfoxyde, le diméthylacétamide, la *N*-méthylpyrrolidone, l'acétonitrile et leurs mélanges.

Mieux encore, il s'agit d'un composé polyvinylique soluble dans l'eau comme, par exemple, le diacrylate d'éthylèneglycol, le diacrylate de diéthylèneglycol, le diacrylate de tétraéthylèneglycol, de diméthacrylate d'éthylèneglycol, le diméthacrylate de triéthylèneglycol, le *N,N'*-méthylènebis(acrylamide), le *N,N'*-éthylènebis(acrylamide), le *N,N'*-triméthylène-bis(acrylamide), le *N,N'*-méthylènebis(méthacrylami.de) et le *N,N'*-éthylènebis(méthacrylamide), le *N,N'*-méthylènebis(acrylamide) étant tout particulièrement préféré.

Conformément à l'invention, le rapport massique du monomère réticulant au monomère *N*-alcényltriazole va, de préférence, de 1/100 à 20/100 et, mieux encore, de 3/100 à 10/100, ce qui correspond, dans ce dernier cas, à un taux de réticulation du monomère *N*-alcényltriazole de 3 à 10%.

Le matériau selon l'invention peut être préparé par un procédé qui comprend les étapes consistant à :
a) former une émulsion entre :
   - une première phase, dite phase dispersante, comprenant le monomère *N*-alcényltriazole de formule générale (I) et le monomère réticulant, dans un rapport massique du monomère réticulant au monomère *N*-alcényltriazole de 1/100 à 60/100, un agent tensioactif, un initiateur (ou amorceur) de polymérisation et, éventuellement, un solvant des monomères N-alcényltriazole et réticulant, et
   - une deuxième phase, dite phase dispersée, comprenant un solvant immiscible avec lesdits monomères et/ou, le cas échéant, avec le solvant de la première phase ;
b) polymériser l'émulsion obtenue à l'étape a) jusqu'à l'obtention d'un matériau solide ; et
c) laver et sécher le matériau obtenu à l'étape b).

Selon une disposition préférée de l'invention, la phase dispersante comprend, outre le monomère *N*-alcényltriazole de formule générale (I), le monomère réticulant, l'agent tensioactif et l'initiateur de réticulation, un solvant polaire tel que l'eau, le diméthylformamide, le diméthylsulfoxyde, le diméthylacétamide, la *N*-méthylpyrrolidone, l'acétonitrile ou un mélange de ceux-ci, tandis que la phase dispersée comprend un solvant apolaire.

Auquel cas, le rapport massique du solvant polaire au monomère *N*-alcényltriazole va, de préférence, de 1/3 à 4/1 et, mieux encore, de 0,8/1 à 2/1, tandis que le rapport massique du solvant apolaire audit monomère est avantageusement de 1/1 à 10/1, de préférence de 1/1 à 6/1 et, mieux encore, de 1,5/1 à 5/1.

Plus encore, on préfère que l'émulsion soit une émulsion « huile-dans-eau », c'est-à-dire que le solvant de la phase dispersante soit de l'eau, de préférence distillée, ou un mélange d'eau et d'un autre solvant polaire, tandis que le solvant de la phase dispersée est un alcane à chaîne longue, c'est-à-dire en C₆ à C₃₂, avantageusement un dodécane ou un tétradécane.

Conformément à l'invention, l'agent tensioactif est, de préférence, un surfactant non ionique, auquel cas il peut notamment être choisi parmi les éthoxylates d'alkyles, les éthoxylates d'alcools gras, les éthoxylates d'amines grasses, les éthoxylates d'acides gras, les éthoxylates d'oxoalcools, les éthoxylates d'alkylphénols comme, par exemple, les éthoxylates d'octylphénol et de nonylphénol, les polymères complexes d'oxydes de polyéthylène et de polypropylène, les copolymères blocs d'oxydes de polyéthylène et de polypropylène comme, par exemple, les copolymères triblocs PEO-PPO-PEO, les condensats d'oxyde d'éthylène et de propylène sur des alcools gras, les monoesters (monolaurate, monomyristate, monostéarate, monopalmitate, monooléate, etc) et polyesters d'acides gras et du sorbitane, les monoesters (monolaurate, monomyristate, monostéarate, monopalmitate, monooléate, etc) et polyesters d'acides gras et du glycérol, les monoesters de polyoxyéthylène sorbitane, et leurs mélanges.

Des agents tensioactifs s'étant révélés convenir particulièrement bien sont, par exemple, les monoesters de polyoxyéthylène sorbitane connus sous le nom commercial Tween^{®}, les éthoxylates d'alcools gras connus sous le nom commercial Brij^{®}, les éthoxylates d'alkylphénols connus sous le nom commercial Igepal^{®}, les copolymères triblocs PEO-PPO-PEO tels que ceux connus sous le nom commercial Pluronic^{®}, et les mélanges de ceux-ci.

Quel que soit l'agent tensioactif utilisé, le rapport massique de cet agent au monomère *N*-alcényltriazole est avantageusement de 0,2/1 à 1/1, de préférence de 0,25/1 à 0,8/1 et, mieux encore, de 0,3/1 à 0,6/1.

L'initiateur de polymérisation est, lui, de préférence un initiateur de polymérisation radicalaire, auquel cas il peut être choisi parmi tous les composés connus pour être aptes à initier une polymérisation de type radicalaire. On préfère, toutefois, qu'il s'agisse d'un composé soluble dans les solvants polaires comme le peroxodisulfate de potassium, le dichlorate de 2,2'-azobis(2-méthyl-propionamidine) et certains peroxydes organiques comme le peroxyde de benzoyle.

En tout état de cause, l'initiateur de polymérisation est avantageusement présent dans l'émulsion dans un rapport massique au monomère *N*-alcényltriazole de 0,5/100 à 10/100, de préférence de 2/100 à 8/100 et, mieux encore, de 4/100 à 6/100.

Conformément à l'invention, l'émulsion peut être préparée au moyen de tout dispositif permettant de réaliser une émulsion entre deux phases de natures différentes. Ainsi, par exemple, une émulsion de faible volume peut être préparée à l'aide d'un agitateur de type vortex (les constituants de l'émulsion étant alors placés dans un tube à essai), tandis qu'une émulsion de volume plus important peut être réalisée dans un réacteur muni d'un système d'agitation mécanique ou bien à l'aide d'un système à deux seringues reliées entre elles et mises en action par un pousse-seringues.

La polymérisation de l'émulsion est, de préférence, réalisée à chaud, c'est-à-dire à une température supérieure à la température ambiante mais ne dépassant pas 100°C, typiquement de 40 à 80°C. Elle est généralement conduite après avoir versé l'émulsion dans un moule, avantageusement en polytétrafluoro-éthylène (Teflon^{®}), de forme et de dimensions correspondant à celles devant être présentées par le matériau final en fonction de l'usage auquel il est destiné. Ce moule est, de préférence, hermétiquement fermé afin d'éviter l'évaporation des solvants volatils ainsi qu'une éventuelle contamination de l'émulsion au cours de la polymérisation. Le temps nécessaire pour que la polymérisation de l'émulsion conduise à un matériau solide est typiquement de l'ordre de 12 à 48 heures.

Le matériau solide obtenu à l'issue de la polymérisation est, une fois démoulé si la polymérisation a été réalisée dans un moule, lavé pour éliminer tous les constituants n'ayant pas polymérisé, c'est-à-dire les monomères n'ayant pas réagi, l'agent tensioactif, les produits de transformation de l'initiateur de polymérisation, le solvant de la phase dispersée et, le cas échéant, le solvant de la phase dispersante. Ce lavage est, de préférence, réalisé en utilisant successivement plusieurs solvants différents ou des mélanges différents de solvants. En particulier, ce lavage peut être réalisé dans un extracteur de type soxhlet en utilisant successivement de l'éthanol, de l'eau distillée, un mélange eau disillée/éthanol ou de l'acétone, un lavage à l'éthanol suivi d'un lavage à l'acétone étant préférés.

Puis, le matériau ainsi lavé est séché, de préférence sous vide à une température allant de 20 à 150°C et, mieux encore, de 40 à 80°C.

L'invention a, encore, pour objet une émulsion utile pour la préparation d'un matériau polyHIPE tel que défini ci-avant, qui comprend :
- une première phase comprenant le monomère *N*-alcényltriazole de formule générale (I) et le monomère réticulant, dans un rapport massique du monomère réticulant au monomère *N*-alcényltriazole de 1/100 à 60/100, un agent tensioactif, un initiateur de polymérisation et, éventuellement, un solvant des monomères *N*-alcényltriazole et réticulant, et
- une deuxième phase comprenant un solvant immiscible avec lesdits monomères et/ou, le cas échéant, avec le solvant de la première phase.

Dans cette émulsion, les caractéristiques préférées du monomère *N*-alcényltriazole, du monomère réticulant, de l'agent tensioactif, de l'initiateur de polymérisation et des solvants sont les mêmes que celles précédemment indiquées pour le matériau polyHIPE selon l'invention et son procédé de préparation. Il en est de même des proportions préférées de ces différents composants.

Le matériau polyHIPE selon l'invention présente de nombreux avantages. En effet, il est rigide, thermostable, homogène et particulièrement résistant même avec un faible taux de réticulation. Ainsi, il est capable de supporter de fortes contraintes et peut, par exemple, être usiné à partir d'un bloc mmonolithique sans être détérioré.

Il est donc tout particulièrement utile pour fabriquer des articles devant à la fois présenter une structure à cellules ouvertes et interconnectées et être capables de résister à des sollicitations mécaniques et/ou thermiques comme, par exemple, des supports de catalyseurs pour la catalyse hétérogène, des filtres à particules, des adsorbants d'ions métalliques ou des capteurs de gaz.

Au surplus, il peut être fabriqué par un procédé qui est relativement simple à mettre en oeuvre et qui n'utilise que des composés qui sont soit disponibles dans le commerce soit aisément synthétisables par un homme du métier. A cet égard, il convient de noter que la synthèse des *N*-alcényltriazole de formule générale (I) est décrite dans le brevet US-A-5,646,293 **[4]** et qu'elle est donc parfaitement connue de l'homme du métier.

D'autres caractéristiques et avantages de l'invention apparaîtront mieux à la lecture du complément de description qui suit, qui se rapporte à des exemples de préparation d'émulsions utiles pour la préparation de matériaux polyHIPE selon l'invention, ainsi qu'à des exemples de réalisation de matériaux polyHIPE selon l'invention à partir de ces émulsions et de démonstration de leurs propriétés.

Bien entendu, ces exemples ne sont donnés qu'à titre d'illustrations de l'objet de l'invention et ne constituent en aucun cas une limitation de cet objet.

### BRÈVE DESCRIPTION DES DESSINS

La figure 1 représente une photographie prise au microscope électronique à balayage, à un grossissement de × 750, d'un premier exemple de matériau polyHIPE selon l'invention.
La figure 2 représente une photographie prise au microscope électronique à balayage, à un grossissement de × 750, d'un deuxième exemple de matériau polyHIPE selon l'invention.
La figure 3 représente une photographie prise au microscope électronique à balayage, à un grossissement de × 750, d'un troisième exemple de matériau polyHIPE selon l'invention.
La figure 4 représente une photographie prise au microscope électronique à balayage, à un grossissement de × 750, d'un quatrième exemple de matériau polyHIPE selon l'invention.
La figure 5 représente une photographie prise au microscope électronique à balayage, à un grossissement de × 750, d'un cinquième exemple de matériau polyHIPE selon l'invention.
La figure 6 représente une photographie prise au microscope électronique à balayage, à un grossissement de × 750, d'un sixième exemple de matériau polyHIPE selon l'invention.
La figure 7 représente une photographie prise au microscope électronique à balayage, à un grossissement de × 750, d'un septième exemple de matériau polyHIPE selon l'invention.
La figure 8 représente une photographie prise au microscope électronique à balayage, à un grossissement de × 3500, d'un huitième exemple de matériau polyHIPE selon l'invention.
La figure 9 représente une photographie prise au microscope électronique à balayage, à un grossissement de × 5000, d'un neuvième exemple de matériau polyHIPE selon l'invention.
La figure 10 représente une photographie prise au microscope électronique à balayage, à un grossissement de × 7500, d'un dixième exemple de matériau polyHIPE selon l'invention.
La figure 11 représente la courbe contrainte-déformation et le module d'Young obtenus en soumettant quatre éprouvettes d'un onzième exemple de matériau polyHIPE selon l'invention à un test en compression.
La figure 12 représente le thermogramme obtenu en soumettant le matériau polyHIPE montré sur la figure 4 à une analyse thermogravimétrique.

### EXPOSÉ DÉTAILLÉ DE MODES DE RÉALISATION PARTICULIERS

### Exemple 1 : Préparation d'émulsions au moyen d'un vortex

On réalise dix émulsions à base de 1-vinyl-1,2,4-triazole, notées ci-après émulsions **1** à **10,** en procédant de la manière suivante.

On introduit dans un tube à essai :
* du 1-vinyl-1,2,4-triazole, noté ci-après VT (Interchim, réf. BE893),
* de l'eau distillée,
* du peroxodisulfate de potassium K₂S₂O₈,
* du *N,N'*-méthylènebis(acrylamide), noté ci-après MBA (Sigma-Aldrich, réf. 148326),
* un agent tensioactif (TA) choisi parmi :
   - un monolaurate de polyoxyéthylène sorbitane, noté ci-après T1 (Sigma-Aldrich, Tween^{®} 20),
   - un éther de polyoxyéthylène et d'oléyle, noté ci-après T3 (Sigma-Aldrich, Brij^{®} 98),
   - un éther de polyoxyéthylène et de nonylphénol, noté ci-après T4 (Sigma-Aldrich, Igepal^{®} CO-890),
   - un copolymère tribloc PEO-PPO-PEO à 80% de PEO, noté ci-après T5 (Sigma-Aldrich, Pluronic^{®} F 108), et
   - des mélanges T1/T4, T3/T4 et T4/T5, et enfin
* un solvant immiscible à l'eau choisi parmi le *n*-dodécane C₁₂H₂₆ et le *n*-tétradécane C₁₄H₃₀.

Puis, on agite ce tube au moyen d'un vortex (Bioblock Scientific, modèle Top-Mix^{®}) pendant 30 minutes pour obtenir une émulsion blanche opaque stable.

Le tableau ci-après I précise, pour chacune des émulsions **1** à **10,** les quantités, exprimées en milligrammes, de VT, de MBA, de K₂S₂O₈ et d'eau distillée utilisées, le type d'agent tensioactif et le type de solvant immiscible à l'eau employés ainsi que leurs quantités, également exprimées en milligrammes.

**TABLEAU 1**

| **Emulsion** | **VT** | **MBA** | **K₂S₂O₈** | **TA** (mg) | **H₂O** | **Solvant immiscible à l'eau** (mg) |
|---|---|---|---|---|---|---|
| **1** | 200 | 10 | 10 | T1 (80) | 200 | C₁₂H₂₆ (1600) |
| **2** | 200 | 10 | 10 | T3 (80) | 200 | C₁₂H₂₆ (1600) |
| **3** | 200 | 10 | 10 | T4 (80) | 200 | C₁₂H₂₆ (1600) |
| **4** | 100 | 10 | 10 | T4 (80) | 300 | C₁₂H₂₆ (1600) |
| **5** | 200 | 10 | 10 | T4 (80) | 200 | C₁₂H₂₆ (1600) |
| **6** | 600 | 30 | 30 | T4 240 | 600 | C₁₂H₂₆ (4200) |
| **7** | 600 | 30 | 30 | T4 (240) | 600 | C₁₄H₃₀ (4200) |
| **8** | 400 | 20 | 20 | T1+T4 (60+60) | 400 | C₁₂H₂₆ (1600) |
| **9** | 400 | 20 | 20 | T3+T4 (60+60) | 400 | C₁₂H₂₆ (1600) |
| **10** | 400 | 20 | 20 | T4+T5 (90+30) | 400 | C₁₂H₂₆ (1600) |

### Exemple 2 : Préparation d'émulsions dans un réacteur muni d'une agitation mécanique

On réalise deux émulsions à base de 1-vinyl-1,2,4-triazole, notées ci-après émulsions **11** et **12**, en procédant de la manière suivante.

On introduit dans un réacteur muni d'une agitation mécanique, en l'occurrence une pale en forme de D, du 1-vinyl-1,2,4-triazole, de l'eau distillée, du peroxodisulfate de potassium et du *N,N*'-méthylène-bis(acrylamide). Tout en maintenant le milieu sous agitation, on ajoute du *n*-dodécane goutte à goutte, puis on poursuit l'agitation pendant 1 heure pour obtenir une émulsion blanche opaque stable.

Le tableau II ci-après précise, pour chacune des émulsions **11** et **12,** les quantités, exprimées en grammes, de VT, de MBA, de K₂S₂O₈, d'agent tensioactif, d'eau distillée et de *n*-dodécane utilisées.

**TABLEAU II**

| **Emulsion** | **VT** | **MBA** | **K₂S₂O₈** | **T3+T4** | **H₂O** | **C₁₂H₂₆** |
|---|---|---|---|---|---|---|
| **11** | 8 | 0,4 | 0,4 | 2,4+2,4 | 5,3 | 32 |
| **12** | 10 | 0,5 | 0,5 | 3+3 | 10 | 40 |

### Exemple 3 : Préparation d'émulsions au moyen d'un pousse-seringues

On réalise six émulsions à base de 1-vinyl-1,2,4-triazole, notées ci-après émulsions **13** à **18,** en procédant de la façon suivante.

On met en solution dans un bécher, sous agitation magnétique, du 1-vinyl-1,2,4-triazole, de l'eau distillée, du *N,N'*-méthylènebis(acrylamide) et un initiateur de polymérisation choisi parmi :
- le peroxodisulfate de potassium,
- le peroxyde de benzoyle, noté ci-après PB, et
- le dichlorate de 2,2'-azobis(2-méthyl-propionamidine, noté ci-après V-50, (Wako Chemicals, V-50) .

On verse cette solution ainsi que du *n*-dodécane dans le corps d'une première seringue de 60 mL. Cette seringue est connectée à une deuxième seringue qui est vide, dont le piston est enfoncé et qui est équipée d'un tube de 4 mm de diamètre et de 20 mm de longueur. On fixe les deux seringues ainsi connectées sur un pousse-seringues. Le temps d'émulsification est fixé à 25 minutes.

Le tableau III précise, pour chacune des émulsions **13** à **18,** les quantités, exprimées en grammes, de VT, de MBA, d'eau distillée et de dodécane utilisées, le type d'initiateur de polymérisation et le type d'agent tensioactif utilisés ainsi que leurs quantités, également exprimées en grammes.

**TABLEAU III**

| **Emulsion** | **VT** | **MBA** | **Initiateur** (g) | **TA** (g) | **H₂O** | **C₁₂H₂₆** |
|---|---|---|---|---|---|---|
| **13** | 6 | 0,3 | K₂S₂O₈ (0,3) | T4 (3) | 6 | 24 |
| **14** | 6 | 0,3 | K₂S₂O₈ (0,3) | T3+T4 (1,5+1,5) | 6 | 10 |
| **15** | 6 | 0,3 | K₂S₂O₈ (0,3) | T4 (3) | 6 | 10 |
| **16** | 6 | 0,3 | PE (0,3) | T3+T4 (1,5+1,5) | 6 | 24 |
| **17** | 6 | 0,3 | V-50 (0,3) | T3+T4 (1,5+1,5) | 6 | 10 |
| **18** | 6 | 0,3 | V-50 (0,3) | T4 (3) | 6 | 10 |

### Exemple 4 : Préparation de matériaux polyHIPE selon l'invention

On réalise onze matériaux polyHIPE de 1-vinyl-1,2,4-triazole réticulé à 5% en masse de *N,N'*-méthylènebis(acrylamide), notés ci-après matériaux **19** à **28,** en procédant de la manière suivante.

On verse une émulsion préparée conformément aux exemples 1 à 3 dans un moule en Teflon^{®}, on ferme le moule et on le chauffe à 60°C pendant 24 heures. Après quoi, on démoule le matériau présent dans le moule, on le lave au soxhlet avec de l'éthanol pendant 48 heures, puis avec de l'acétone pendant 24 heures, et on le sèche sous vide à 55°C pendant 5 jours.

Le tableau IV précise, pour chacun des matériaux **19** à **28,** l'émulsion à partir de laquelle il est réalisé, les dimensions internes du moule dans lequel cette émulsion est versée et la porosité présentée par le matériau à l'issue de son séchage. Cette porosité a été déterminée par porosimétrie par intrusion de mercure.

**TABLEAU IV**

| **Matériau** | **Emulsion utilisée** | **Dimensions internes du moule** | **Porosité du matériau** |
|---|---|---|---|
| **19** | 6 | φ = 15 mm | 66% |
| | | H = 30 mm | |
| **20** | 7 | φ = 15 mm | 69% |
| | | H = 30 mm | |
| **21** | 12 | φ = 15 mm | 86% |
| | | H = 30 mm | |
| **22** | 13 | φ = 15 mm | 80% |
| | | H = 30 mm | |
| **23** | 14 | φ = 15 mm | 68% |
| | | H = 30 mm | |
| **24** | 16 | φ = 15 mm | 75% |
| | | H = 30 mm | |
| **25** | 17 | φ = 15 mm | 72% |
| | | H = 30 mm | |
| **26** | 15 | φ = 32 mm | 70% |
| | | H = 110 mm | |
| **27** | 16 | φ = 15 mm | 75% |
| | | H = 30 mm | |
| **28** | 17 | φ = 15 mm | 72% |
| | | H = 30 mm | |

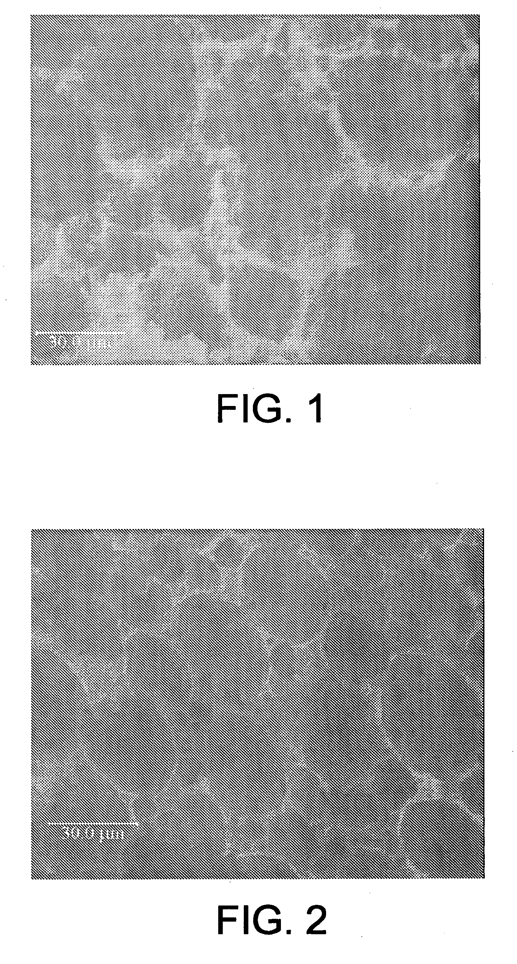

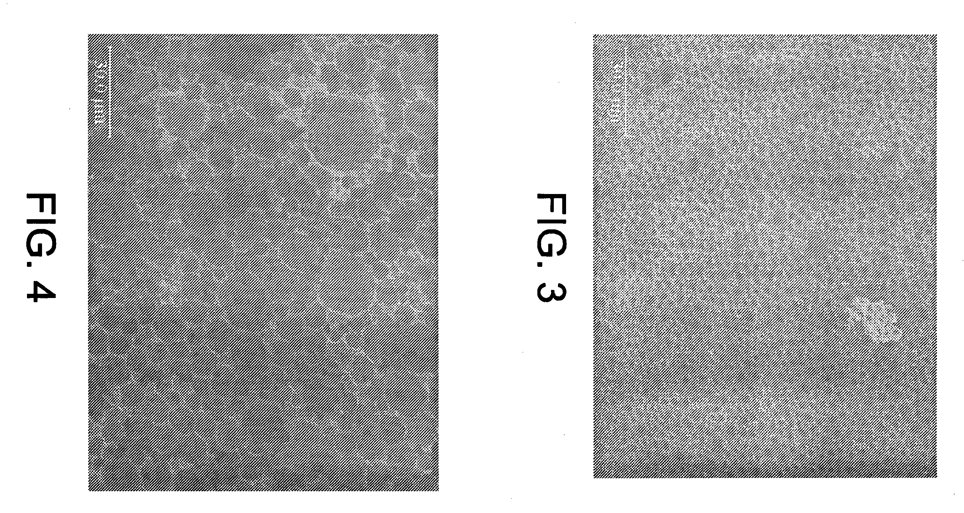

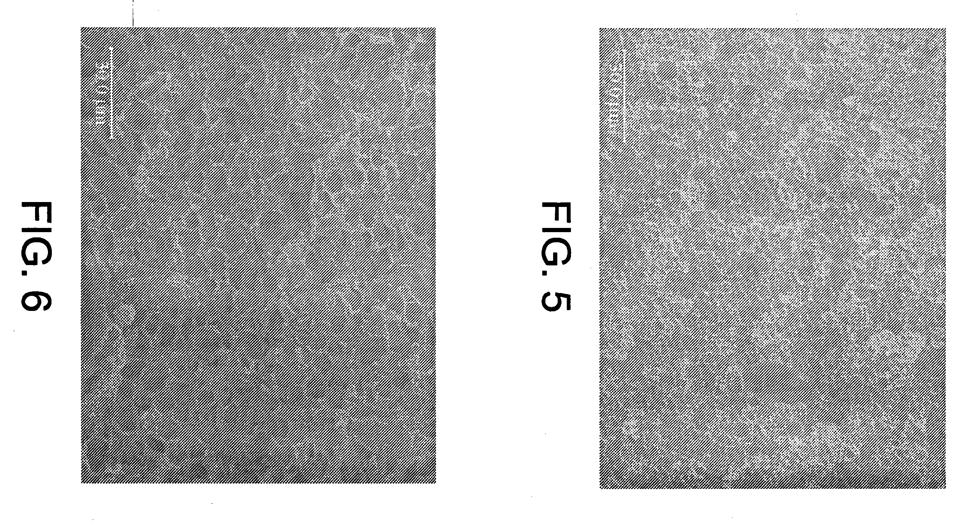

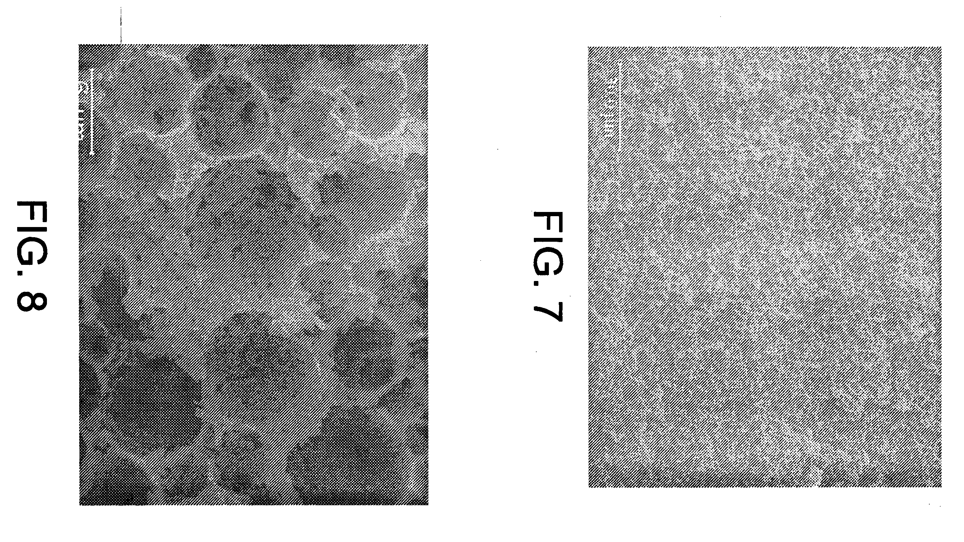

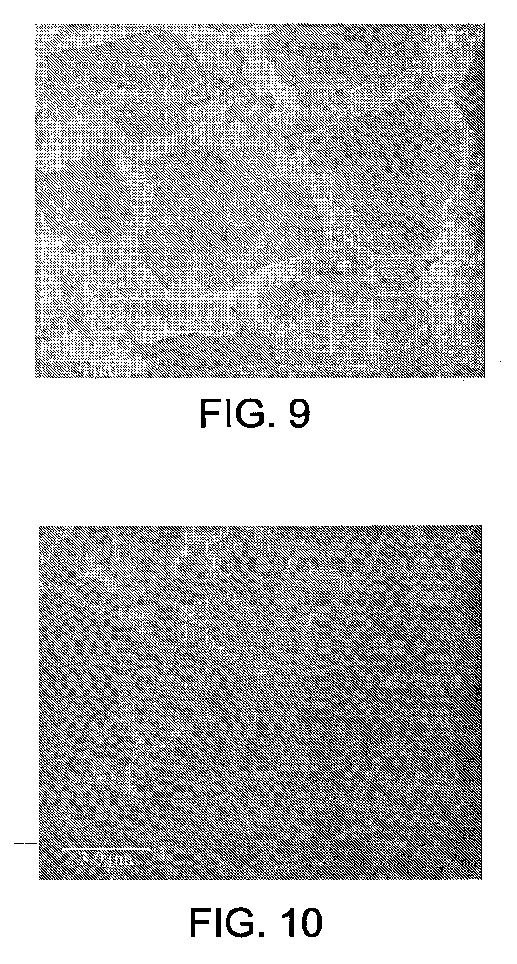

Les figures 1 à 10, qui correspondent à des photographies des matériaux **19** à **28,** prises au microscope électronique à balayage à des grossissements allant de × 750 à × 7500 selon les cas, montrent la structure à cellules ouvertes et interconnectées présentée par ces matériaux.

### Exemple 5 : Propriétés des matériaux polyHIPE selon l'invention

### 5.1. Résistance mécanique :

On réalise des éprouvettes d'un matériau polyHIPE de 1-vinyl-1,2,4-triazole réticulé à 5% en masse de *N,N'*-méthylènebis(acrylamide) en procédant comme décrit dans l'exemple 4 ci-avant mais en utilisant comme émulsion, l'émulsion **15** et des moules de 7 mm de diamètre interne et de 4 mm de hauteur interne. Les éprouvettes ainsi obtenues sont donc cylindriques et mesurent 7 mm de diamètre sur 4 mm d'épaisseur. Leur porosité est de 70%.

Elles sont soumises à des tests de compression que l'on réalise à température ambiante, en utilisant un appareil Instron 4460 muni d'une cellule de mesure statique de 500 N. Les éprouvettes sont comprimées à vitesse constante (5 mm/min) normalement à leurs surfaces planes entre deux plaques métalliques.

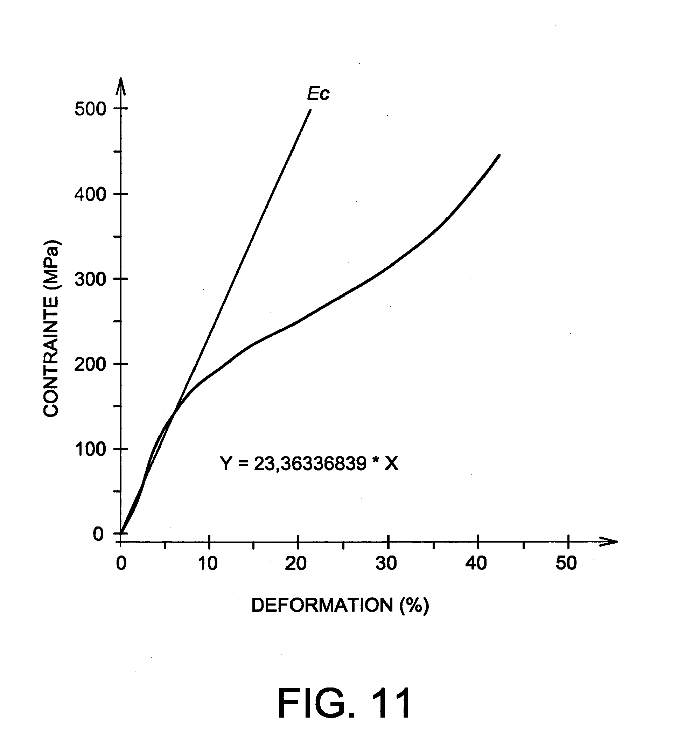

La figure 11 représente la courbe de contrainte-déformation établie à partir des données recueillies pour un minimum de quatre échantillons ainsi que le module de Young *E_{c}* calculé à partir de ces mêmes données.

On constate que ce module est de 23,4 MPa, soit plus de deux fois supérieur à celui rapporté par H. Deleuze et al. (ibid) pour des matériaux polyHIPE formés de polystyrène réticulé à 50% par du divinylbenzène, de porosité comparable à celle du matériau **29** (80% *versus* 70%) .

Ce qui signifie que les matériaux polyHIPE selon l'invention présentent une résistance mécanique tout à fait remarquable même avec un taux de réticulation très faible (ici de 5%).

### 5.2. Stabilité thermique :

On préchauffe le matériau **22** à 110°C, sous vide, pendant toute une nuit puis on le soumet à une analyse thermogravimétrique au moyen d'un analyseur Netzsch STA 409 sous atmosphère d'argon, en portant la température de 25°C à 650°C à raison de 10°C/minute.

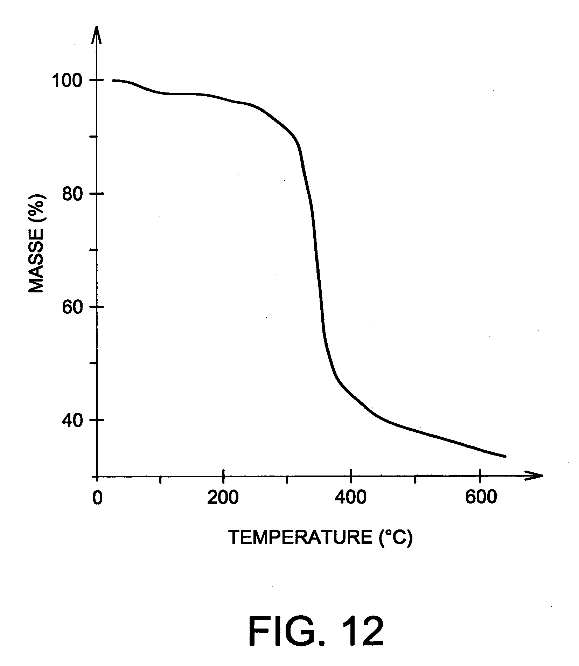

La figure 12 représente le thermogramme ainsi obtenu, lequel montre que le matériau polyHIPE selon l'invention présente une bonne stabilité thermique, de l'ordre de 280-300°C.

### REFERENCES CITEES

**[1]** H. Deleuze et al., Polymer 2005, 46, 9653-9663
**[2]** WO-A-2004/044041
**[3]** P. Krajnc et al., Macromol. Rapid Comm. 2005, 26, 1289-1293
**[4]** US-A-5,646,293

## Revendications

1. Matériau obtenu par polymérisation d'une émulsion à phase interne hautement concentrée, qui comprend sous forme copolymérisée :
a) au moins un monomère *N*-alcényltriazole répondant à la formule générale (I) ci-après : 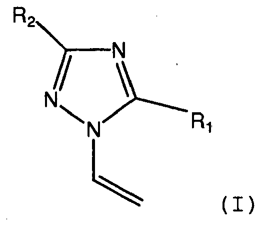 dans laquelle R₁ et R₂ représentent, indépendamment l'un de l'autre, un atome d'hydrogène ou d'halogène, un groupe -OH, -SH, -SO₃H, -NO₂, -NH₂, -COOH, -CₙF₂ₙ₊₁ où n est un nombre entier allant de 1 à 12, un groupe hydrocarboné aliphatique en C₁ à C₁₆, éventuellement interrompu par un ou plusieurs atomes d'oxygène et/ou de soufre, ou bien un groupe hydrocarboné cyclique en C₃ à C₁₆ ou hétérocyclique de 3 à 16 chaînons ; et
b) un monomère réticulant ;
le rapport massique du monomère réticulant au monomère *N*-alcényltriazole allant de 1/100 à 60/100.

2. Matériau selon la revendication 1, dans lequel le monomère *N*-alcényltriazole est choisi parmi les monomères de formule générale (I) dans laquelle R₁ et R₂ représentent, indépendamment l'un de l'autre, un atome d'hydrogène, un groupe -OH, -SH, -SO₃H, -NO₂, -NH₂, -COOH ou CₙF₂ₙ₊₁ avec n tel que précédemment défini.

3. Matériau selon la revendication 2, dans lequel le monomère *N*-alcényltriazole est le 1-vinyl-1,2,4-triazole.

4. Matériau selon l'une quelconque des revendications précédentes, dans lequel le monomère réticulant est un monomère polyvinylique soluble dans les solvants polaires.

5. Matériau selon la revendication 4, dans lequel le monomère réticulant est un monomère polyvinylique soluble dans l'eau.

6. Matériau selon la revendication 5, dans lequel le monomère réticulant est choisi parmi le diacrylate d'éthylèneglycol, le diacrylate de diéthylèneglycol, le diacrylate de tétraéthylèneglycol, de diméthacrylate d'éthylèneglycol, le diméthacrylate de triéthylèneglycol, le *N,N'*-méthylènebis(acrylamide), le *N,N'*-éthylènebis(acrylamide), le *N,N'*-triméthylène-bis(acrylamide), le *N,N'*-méthylènebis(méthacrylamide) et le *N,N'*-éthylènebis(méthacrylamide).

7. Matériau selon la revendication 6, dans lequel le monomère réticulant est le *N,N'*-méthylène-bis(acrylamide).

8. Matériau selon l'une quelconque des revendications précédentes, dans lequel le rapport massique du monomère réticulant au monomère *N*-alcényltriazole va de 1/100 à 20/100 et, de préférence, de 3/100 à 10/100.

9. Procédé de préparation d'un matériau tel que défini dans l'une quelconque des revendications 1 à 8, qui comprend :
a) former une émulsion entre :
- une première phase comprenant le monomère *N*-alcényltriazole de formule générale (I) et le monomère réticulant, dans un rapport massique du monomère réticulant au monomère *N*-alcényltriazole de 1/100 à 60/100, un agent tensioactif, un initiateur de polymérisation et, éventuellement, un solvant des monomères *N*-alcényltriazole et réticulant, et
- une deuxième phase comprenant un solvant immiscible avec lesdits monomères et/ou, le cas échéant, avec le solvant de la première phase ;
b) polymériser l'émulsion obtenue à l'étape a) jusqu'à l'obtention d'un matériau solide ; et
c) laver et sécher le matériau obtenu à l'étape b).

10. Procédé selon la revendication 9, dans lequel la première phase comprend un solvant polaire, tandis que la deuxième phase comprend un solvant apolaire.

11. Procédé selon la revendication 10, dans lequel le rapport massique du solvant polaire au monomère *N*-alcényltriazole va de 1/3 à 4/1 et, de préférence, de 0,8/1 à 2/1, tandis que le rapport massique du solvant apolaire audit monomère va de 1/1 à 10/1 et, de préférence, de 1/1 à 6/1.

12. Procédé selon la revendication 10 ou la revendication 11, dans lequel la première phase comprend de l'eau ou un mélange formé d'eau et d'un autre solvant polaire, tandis que la deuxième phase comprend un alcane en C₆ à C₃₂.

13. Procédé selon l'une quelconque des revendications 9 à 12, dans lequel l'agent tensioactif est un surfactant non ionique.

14. Procédé selon la revendication 13, dans lequel l'agent tensioactif est choisi parmi les éthoxylates d'alkyles, les éthoxylates d'alcools gras, les éthoxylates d'amines grasses, les éthoxylates d'acides gras, les éthoxylates d'oxoalcools, les éthoxylates d'alkylphénols, les polymères complexes d'oxydes de polyéthylène et de polypropylène, les copolymères blocs d'oxydes de polyéthylène et de polypropylène, les condensats d'oxyde d'éthylène et de propylène sur des alcools gras, les monoesters et polyesters d'acides gras et du sorbitane, les monoesters et polyesters d'acides gras et du glycérol, les monoesters de polyoxyéthylène sorbitane, et leurs mélanges.

15. Procédé selon l'une quelconque des revendications 9 à 14, dans lequel le rapport massique de l'agent tensioactif au monomère *N*-alcényltriazole va de 0,2/1 à 1/1 et, de préférence, de 0,25/1 à 0,8/1.

16. Procédé selon l'une quelconque des revendications 9 à 15, dans lequel l'initiateur de polymérisation est un initiateur de polymérisation radicalaire.

17. Procédé selon l'une quelconque des revendications 9 à 16, dans lequel le rapport massique de l'initiateur de polymérisation au monomère N-alcényltriazole va de 0,5/100 à 10/100 et, de préférence, de 2/100 à 8/100.

18. Procédé selon l'une quelconque des revendications précédentes, dans lequel l'émulsion est polymérisée à une température supérieure à la température ambiante mais ne dépassant pas 100°C, de préférence de 40 à 80°C.

19. Emulsion utile pour la préparation d'un matériau tel que défini dans l'une quelconque des revendications 1 à 8, qui comprend :
- une première phase comprenant le monomère *N*-alcényltriazole de formule générale (I) et le monomère réticulant, dans un rapport massique du monomère réticulant au monomère *N*-alcényltriazole de 1/100 à 60/100, un agent tensioactif, un initiateur de polymérisation et, éventuellement, un solvant des monomères *N*-alcényltriazole et réticulant, et
- une deuxième phase comprenant un solvant immiscible avec lesdits monomères et/ou, le cas échéant, avec le solvant de la première phase.

20. Article qui est constitué en tout ou partie d'un matériau selon l'une quelconque des revendications 1 à 8.

21. Article selon la revendication 20, qui est un support de catalyseur(s) pour la catalyse hétérogène, un filtre à particules, un adsorbant d'ions métalliques ou un capteur de gaz.

## Patentansprüche

1. Material, welches durch Polymerisation einer Emulsion mit innerer hochkonzentrierter Phase erhalten wird, wobei das Material in copolymerisierter Form Folgendes aufweist:
a) mindestens ein N-Alkenyltriazol-Monomer, welches der nachfolgenden allgemeinen Formel (I) entspricht: 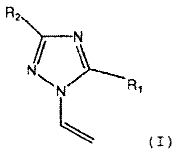 wobei in der Formel R₁ und R₂ unabhängig voneinander Folgendes darstellen: ein Wasserstoffatom oder ein Halogenatom, eine Gruppe -OH, -SH, -SO₃H, -NO₂, -NH₂, -COOH, -CₙF₂ₙ₊₁, wobei n eine ganze Zahl von 1 bis 12 ist, eine aliphatische C₁- bis C₁₆-Kohlenwasserstoff-Gruppe, gegebenenfalls durch ein oder mehrerere Sauerstoffatome und/oder Schwefelatome unterbrochen, oder eine cyclische C₃ bis C₁₆-Kohenwasserstoff-Gruppe oder heterocyclische Kohlenwasserstoff-Gruppe mit 3 bis 16 Gliedern; und
b) ein vernetzendes Monomer;
wobei das Masseverhältnis des vernetzenden Monomers zu dem N-Alkenyltriazol-Monomer von 1/100 bis 60/100 reicht.

2. Material nach Anspruch 1, in welchem das N-Alkenyltriazol-Monomer aus den Monomeren mit der allgemeinen Formel (I) ausgewählt wird, in welcher R₁ und R₂ unabhängig voneinander ein Wasserstoffatom, eine Gruppe -OH, -SH, -SO₃H, -NO₂, -NH₂, -COOH oder -CₙF₂ₙ₊₁ mit n wie zuvor definiert, darstellen.

3. Material nach Anspruch 2, in welchem es sich bei dem N-Alkenyltriazol-Monomer um 1-Vinyl-1,2,4-Triazol handelt.

4. Material nach einem der vorhergehenden Ansprüche, in welchem das vernetzende Monomer ein Polyvinyl-Monomer ist, welches in polaren Lösungsmitteln löslich ist.

5. Material nach Anspruch 4, in welchem das vernetzende Monomer ein in Wasser lösliches Polyvinyl-Monomer ist.

6. Material nach Anspruch 5, in welchem das vernetzende Monomer ausgewählt wird aus: Ethylenglykoldiacrylat, Diethylenglykoldiacrylat, Tetraethylenglycoldiacrylat, Ethylenglykoldimethacrylat, Triethylenglykoldimethacrylat, N,N'-Methylenbis(acrylamid), N,N'-Ethylen-bis(acrylamid), N,N'-Trimethylenbis(acrylamid), N,N'-Methylenbis(methacrylamid) und N,N'-Ethylenbis(methacrylamid).

7. Material nach Anspruch 6, in welchem es sich bei dem vernetzenden Monomer um N,N'-Methylenbis(acrylamid) handelt.

8. Material nach einem der vorhergehenden Ansprüche, in welchem das Masseverhältnis des vernetzenden Monomers zu dem N-Alkenyltriazol-Monomer von 1/100 bis 20/100 und vorzugsweise von 3/100 bis 10/100 reicht.

9. Verfahren zur Herstellung eines Materials gemäß Definition in einem der Ansprüche 1 bis 8, wobei das Verfahren die folgenden Schritte aufweist:
a) Bildung einer Emulsion zwischen:
- einer ersten Phase, welche das N-Alkenyltriazol-Monomer der allgemeinen Formel (I) und das vernetzende Molekül in einem Masseverhältnis des vernetzenden Moleküls zu dem N-Alkenyltriazol-Monomer von 1/100 bis 60/100, ein Tensid, einen Polymerisationsinitiator und gegebenenfalls ein Lösungsmittel für das N-Alkenyltriazol-Monomer und das vernetzende Monomer enthält; und
einer zweiten Phase, welche ein Lösungsmittel enthält, welches mit den Monomeren und/oder gegebenenfalls mit dem Lösungsmittel der ersten Phase nicht mischbar ist;
b) Polymerisation der in Schritt a) erhaltenen Emulsion bis zum Erhalt eines festen Materials; und
c) Reinigung und Trocknung des in Schritt b) erhaltenen Materials.

10. Verfahren nach Anspruch 9, in welchem die erste Phase ein polares Lösungsmittel aufweist, während die zweite Phase ein apolares Lösungsmittel aufweist.

11. Verfahren nach Anspruch 10, in welchem das Masseverhältnis des polaren Lösungsmittels zu dem N-Alkenlyltriazol-Monomer von 1/3 bis 4/1 und vorzugsweise von 0,8/1 bis 2/1 reicht, während das Masseverhältnis des apolaren Lösungsmittels zu dem Monomer von 1/1 bis 10/1 und vorzugsweise von 1/1 bis 6/1 reicht.

12. Verfahren nach Anspruch 10 oder Anspruch 11, in welchem die erste Phase Wasser oder ein Gemisch gebildet aus Wasser und einem anderen polaren Lösungsmittel aufweist, während die zweite Phase ein C₆-C₃₂-Alkan aufweist.

13. Verfahren nach einem der Ansprüche 9 bis 12, in welchem das Tensid ein nichtionischer oberflächenaktiver Stoff ist.

14. Verfahren nach Anspruch 13, in welchem das Tensid aus Folgendem ausgewählt wird: Alkyl-Ethoxylaten, Fettalkohol-Ethoxylaten, Fettamin-Ethoxylaten, Fettsäure-Ethoxylaten, Oxoalkohol-Ethoxylaten, Alkylphenol-Ethoxylaten, komplexen Polymeren von Polyethylenoxiden und Polypropylenoxiden, Copolymerblöcken von Polyethylenoxiden und Polypropylenoxiden, Ethylenoxid- und Propylenoxid-Kondensaten an Fettalkoholen, Monoestern und Polyestern von Fettsäuren und Sorbitan, Monoestern und Polyestern von Fettsäuren und Glyzerin, Polyoxyethylensorbitanmonoestern, und deren Gemischen.

15. Verfahren nach einem der Ansprüche 9 bis 14, in welchem das Masseverhältnis desTensids zu dem N-Alkenyltriazol-Monomer von 0,2/1 bis 1/1 und vorzugsweise von 0,25/1 bis 0,8/1 reicht.

16. Verfahren nach einem der Ansprüche 9 bis 15, in welchem der Polymerisationsinitiator ein radikalischer Polymerisationsinitiator ist.

17. Verfahren nach einem der Ansprüche 9 bis 16, in welchem das Masseverhältnis des Polymerisationsinitiators zu dem N-Alkenyltriazol-Monomer von 0,5/100 bis 10/100 und vorzugsweise von 2/100 bis 8/100 reicht.

18. Verfahren nach einem der vorhergehenden Ansprüche, in welchem die Emulsion bei einer Temperatur höher als Umgebungstemperatur polymerisiert wird, wobei die Temperatur jedoch 100°C nicht übersteigt, und vorzugsweise bei einer Temperatur von 40 bis 80°C.

19. Emulsion, welche nützlich ist für die Herstellung eines Materials gemäß Definition in einem der Ansprüche 1 bis 8, wobei die Emulsion Folgendes aufweist:
- eine erste Phase, welche das N-Alkenyltriazol-Monomer der allgemeinen Formel (I) und das vernetzende Molekül in einem Masseverhältnis des vernetzenden Moleküls zum N-Alkenyltriazol-Molekül von 1/100 bis 60/100, ein Tensid, einen Polymerisationsinitiator, und gegebenenfalls ein Lösungsmittel für das N-Alkenyltriazol-Monomer und das vernetzende Monomer aufweist, und
- eine zweite Phase, welche ein mit diesen Monomeren und/oder gegebenenfalls mit dem Lösungsmittel der ersten Phase nicht mischbares Lösungsmittel aufweist.

20. Gegenstand, welcher ganz oder zum Teil aus einem Material nach einem der Ansprüche 1 bis 8 besteht.

21. Gegenstand nach Anspruch 20, welcher ein Katalysatorträger für die heterogene Katalyse, ein Partikelfilter, ein Adsorptionsmittel für Metallionen oder ein Gassensor ist.

## Claims

1. Material obtained by polymerizing a high internal phase emulsion which, in copolymerized form, comprises:
a) at least one *N*-alkenyltriazole monomer meeting following general formula (I): 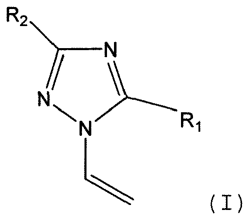 wherein R₁ and R₂ each independently represent a hydrogen or halogen atom, a group -OH, -SH, -SO₃H, -NO₂, -NH₂, -COOH, -CₙF₂ₙ₊₁ in which n is an integer ranging from 1 to 12, a C₁ to C₁₆ aliphatic hydrocarbon group optionally interrupted by one or more oxygen and/or sulphur atoms or by a cyclic C₃ to C₁₆ hydrocarbon group or heterocyclic with 3 to 16 members; and
b) a cross-linking monomer;
the weight ratio of the cross-linking monomer to the *N*-alkenyltriazole monomer ranging from 1/100 to 60/100.

2. Material according to claim 1, wherein the *N*-alkenyltriazole monomer is chosen from the monomers of general formula (I) in which R₁ and R₂ each independently represent a hydrogen atom, a -OH, -SH, -SO₃H, -NO₂, -NH₂, -COOH or CₙF₂ₙ₊₁ group in which n is as previously defined.

3. Material according to claim 2, wherein the N-alkenyltriazole monomer is 1-vinyl-1,2,4-triazole.

4. Material according to any of the preceding claims, wherein the cross-linking monomer is a polyvinyl monomer soluble in polar solvents.

5. Material according to claim 4, wherein the cross-linking monomer is a water-soluble polyvinyl monomer.

6. Material according to claim 5, wherein the cross-linking monomer is chosen from ethyleneglycol diacrylate, diethyleneglycol diacrylate, tetraethylene-glycol diacrylate, ethyleneglycol dimethacrylate, triethyleneglycol dimethacrylate, *N,N'*-methylenebis-(acrylamide), *N,N'*-ethylenebis(acrylamide), *N,N'-*trimethylenebis(acrylamide), *N,N'*-methylenebis (methacrylamide) and *N,N'*-ethylene-bis(methacrylamide).

7. Material according to claim 6, wherein the cross-linking monomer is *N,N'*-methylene-bis(acrylamide).

8. Material according to any of the preceding claims, wherein the weight ratio of the cross-linking monomer to the *N*-alkenyltriazole monomer ranges from 1/100 to 20/100 and preferably from 3/100 to 10/100.

9. Method for preparing a material as defined in any of claims 1 to 8, which comprises:
a) forming an emulsion between:
- a first phase comprising the N-alkenyltriazole monomer of general formula (I) and the cross-linking monomer in a weight ratio of cross-linking monomer to *N*-alkenyltriazole monomer of 1/100 to 60/100, a surfactant, a polymerization initiator and, optionally, a solvent of the *N*-alkenyltriazole and cross-linking monomers, and
- a second phase comprising a solvent immiscible with said monomers and/or, optionally, with the solvent of the first phase;
b) polymerizing the emulsion obtained at step a) until a solid material is obtained; and
c) washing and drying the material obtained at step b).

10. Method according to claim 9, wherein the first phase comprises a polar solvent, whilst the second phase comprises an apolar solvent.

11. Method according to claim 10, wherein the weight ratio of the polar solvent to the N-alkenyltriazole monomer ranges from 1/3 to 4/1 and preferably from 0.8/1 to 2/1, whilst the weight ratio of apolar solvent to said monomer ranges from 1/1 to 10/1 and preferably from 1/1 to 6/1.

12. Method according to claim 10 or claim 11, wherein the first phase comprises water or a mixture formed of water and another polar solvent, whilst the second phase comprises a C₆ to C₃₂ alkane.

13. Method according to any of claims 9 to 12, wherein the surfactant is a non-ionic surfactant.

14. Method according to claim 13, wherein the surfactant is chosen from alkyl ethoxylates, fatty alcohol ethoxylates, fatty amine ethoxylates, oxa-alcohol ethoxylates, alkylphenol ethoxylates, polyethylene oxide and polypropylene oxide complex polymers, polyethylene oxide-polypropylene oxide block copolymers, ethylene oxide and propylene oxide fatty alcohol condensates, fatty acid and sorbitan monoesters and polyesters, fatty acid and glycerol monoesters and polyesters, polyoxyethylene sorbitan monoesters, and mixtures thereof.

15. Method according to any of claims 9 to 14, wherein the weight ratio of surfactant to the *N*-alkenyltriazole monomer ranges from 0.2/1 to 1/1 and preferably from 0.25/1 to 0.8/1.

16. Method according to any of claims 9 to 15, wherein the polymerization initiator is a radical polymerization initiator.

17. Method according to any of claims 9 to 16, wherein the weight ratio of polymerization initiator to the N-alkenyltriazole monomer ranges from 0.5/100 to 10/100 and preferably from 2/100 to 8/100.

18. Method according to any of the preceding claims, wherein the emulsion is polymerized at a temperature higher than ambient temperature but not exceeding 100°C, preferably from 40 to 80°C.

19. Emulsion useful for the preparation of a material such as defined in any of claims 1 to 8, which comprises:
- a first phase comprising the *N*-alkenyltriazole monomer of general formula (I) and the cross-linking monomer, in a weight ratio of cross-linking monomer to *N*-alkenyltriazole monomer of 1/100 to 60/100, a surfactant, a polymerization initiator and, optionally, a solvent of the *N*-alkenyltriazole and cross-linking monomers, and
- a second phase comprising a solvent immiscible with said monomers and/or, optionally, with the solvent of the first phase.

20. Article consisting in whole or in part of a material according to any of claims 1 to 8.

21. Article according to claim 20, which is a catalysis carrier for heterogeneous catalysis, a particle filter, a metal ion adsorbent or a gas sensor.
